# EUROPÄISCHE PATENTSCHRIFT

(11) **EP 3 293 456 B1**
(45) Veröffentlichungstag und Bekanntmachung des Hinweises auf die Patenterteilung: **24.02.2021**
(21) Anmeldenummer: 17175526.7
(22) Anmeldetag: 12.06.2017
(51) Int. Cl.: F23Q 1/02, F23D 14/22, F23L 7/00

(54) **BRENNER**
BURNER
BRÛLEUR

(30) Priorität: 14.07.2016 DE 102016008579
(43) Veröffentlichungstag der Anmeldung: 14.03.2018
(73) Patentinhaber: Messer Austria GmbH, 2352 Gumpoldskirchen (AT)
(72) Erfinder: Demuth, Martin, 2353 Guntramsdorf (AT)
(74) Vertreter: Münzel, Joachim R.

(56) Entgegenhaltungen:
- EP-A1- 2 846 091
- US-A- 2 034 041
- US-A- 3 552 897
- US-A- 4 231 734

## Beschreibung

Die Erfindung betrifft einen Brenner, der mit wenigstens einem Brennstoffkanal und wenigstens einem Oxidationsmittelkanal, die einem zum Einbau in der Wand eines metallurgischen Behandlungsraums bestimmten Brennergehäuse zugeordnet sind und an einem gemeinsamen Brennermund ausmünden, sowie mit einer Zündeinrichtung zum Zünden eines sich vor dem Brennermund im Behandlungsraum bildenden Brennstoff-Oxidationsmittelgemisches ausgerüstet ist.

Die Erfindung betrifft des weiteren ein Verfahren zum Zünden eines Brennstoff-Oxidationsmittelgemisches vor dem Brennermund eines Brenners.

Die eingangs genannten Brenner werden als außenmischende Brenner bezeichnet. Da bei ihnen keine Mischkammern oder Flammenhalter vorgesehen sind, erfolgt die Zündung derzeit üblicherweise auf Basis eines elektrischen Funkens mittels einer Zündeinrichtung, die im Mischbereich von Brennstoff und Oxidationsmittel, in der Regel unmittelbar vor der Ausmündung (dem "Brennermund") des Brenners in den metallurgischen Behandlungsraum, positioniert ist und bei der zwischen einer stromführenden Elektrode und dem über die Wand des metallurgischen Behandlungsraums geerdeten Brennergehäuse ein Zündfunke erzeugt wird. Ein derartiger Brenner wird beispielsweise in der EP 0 363 787 A1 beschrieben. Die Zündeinrichtung muss dabei sehr exakt positioniert werden. So muss zwischen Elektrode und Brennergehäuse ein Abstand von ca. 1-2 mm eingehalten werden. Berühren sich die beiden Elemente, gibt es keinen Funken; ist der Abstand zu groß oder die Wegstrecke zwischen Elektrode und Brennergehäuse durch Verschmutzung versperrt, springt der Funke innerhalb des Brenners oder gar nicht über. Verschärft wird diese Problematik durch die Positionierung der Zündeinrichtung vor dem Brennermund, da dieser Bereich hohen Temperaturunterschieden ausgesetzt ist und überdies aus dem Innern des metallurgischen Behandlungsraums heraus Schlackenspritzer auf den Brennermund auftreffen können. Zudem erfordert der Austausch oder die Wartung der Zündapparaturen nicht selten den Austausch des kompletten Brenners. Besonders heikel ist die Situation bei Brennstoff-Sauerstoffbrennern, da diese aufgrund des fehlenden Stickstofftransports eine verhältnismäßig schlanke Bauform aufweisen, die nicht nur die exakte Positionierung der Zündeinrichtung erschwert, sondern bei der zudem die am Brennermund angeordnete Zündapparatur den Gasfluss von Brennstoff und/oder Oxidationsmittel beeinflussen kann.

Aus der US 3 552 897 A ist eine gattungsgemäße Vorrichtung und ein Verfahren zum Zünden eines Brennstoff/Oxidationsmittelgemisches für einen Brenner bekannt, bei dem ein Brennstoffstrom und ein Luftstrom an einem Brennermunde zusammengeführt werden. Zum Zünden des brennbaren Gemisches dient eine nahe am Brennermund angeordnete Zündeinrichtung mit einem drehbar gelagerten Zündscheibe, das mit einem Feuerstein zusammenwirkt. Durch die räumliche Nähe zum Brennermund ist die Zündeinrichtung jedoch Schlackenspritzern aus der Brennkammer ausgesetzt, die die Funktionsfähigkeit der Zündeinrichtung beeinträchtigen können.

Aus der US 2 034 041 A ist eine nicht metallurgische Brenneranordnung bekannt, bei der ein gasförmiger Brennstoff über eine Anzahl von Düsen ausgestoßen und mit an einer entsprechenden Anzahl an Öffnungen in einem an den Düsen entlangführenden Luftkanal eingesaugten Luft verbrannt wird. Zum Zünden dient ein an einem Ende des Luftkanals angeordnetes, drehbar gelagertes, mit einem Feuerstein zusammenwirkendes Zündscheibe, das bei der Zündung mit einem Teilstrom des Brennstoffs beaufschlagt wird.

Ein in der EP 2 846 091 A1 beschriebener Brenner zeichnet sich durch eine Glühzündung aus. Dabei ist die Zündeinrichtung mit einer Heizfläche ausgerüstet, an der ein Teilstrom des Oxidationsmittels und/oder des Brennstoffs entlanggeführt wird. Der Teilstrom wird in thermischen Kontakt mit der auf eine hohe Temperatur erhitzten Heizfläche gebracht, dadurch seinerseits aufgeheizt und anschließend mit einem Teilstrom des jeweils anderen Brenngases vermischt. Bei der Heizfläche handelt es sich beispielsweise um einen metallischen Leiter, der durch Stromfluss beheizt und dabei zum Glühen gebracht wird. Die auf den ersten Teilstrom übertragene Wärmeenergie ist dabei so hoch, dass zumindest lokal die Zündtemperatur des Gasgemisches überschritten wird. Bei der Vermischung der Teilströme entsteht ein zündfähiges Gemisch, das unter Ausbildung einer oder mehrere Flammen miteinander reagiert. Die Flammen werden nachfolgend durch den Druck der nachströmenden Brenngase in Form von Flammensträhnen zum Brennermund hinausgetragen und zünden vor dem Brennermund das sich aus dem Hauptströmen von Brennstoff und Oxidationsmittel gebildete Brennstoff-/Oxidationsmittelgemisch, das in der Folge selbsttätig weiterbrennt. Die Zündung wird bei diesem Gegenstand also ohne Zuhilfenahme einer funkenerzeugende Zündeinrichtung ausgelöst.

Die DE 1 919 247 A1 betrifft eine Vorrichtung zum Zünden eines mit Druck strömenden brennbaren Gas- /Luftgemisches, die insbesondere für Einrichtungen zum Abfackeln von überschüssigem Gas vorgesehen ist, wie sie etwa in der chemischen und petrochemischen Industrie benutzt werden. Die Zündeinrichtung umfasst eine in beiden Axialrichtungen bewegbare Stange, die auf mindestens einem Teil ihrer Außenfläche eine Zündfläche aufweist, an der ein auswechselbarer Feuerstein oder eine vergleichbare funkenschlagende Einrichtung unter dem Druck einer Feder anliegt. Wenn die Stange in Axialrichtung verschoben wird, entstehen auf Grund der Reibung zwischen Zündfläche und Feuerstein glühende Feststoffpartikel (Funken), die das umgebende Gas- Luftgemisch zünden. Die Betätigung der Stange erfolgt manuell, um Sicherheitsbedenken Rechnung zu tragen, die mit der Verwendung elektrischer Einrichtungen in der petrochemischen Industrie verbunden sind. Allerdings ist die beschriebene Anordnung sehr kompliziert im Aufbau und störanfällig im Betrieb. In Brennern der eingangs beschriebenen Art, die in einen metallurgischen Behandlungsraum einmünden, ist dieser Gegenstand nicht ohne weiteres einsetzbar.

Der Erfindung liegt daher die Aufgabe zugrunde, einen gasförmige, pulverförmige und/oder flüssige Brennstoffe zusammen mit einem Oxidationsmittel in einen metallurgischen Behandlungsraum eintragenden Brenner zu schaffen, der mit einer Zündeinrichtung ausgerüstet ist, die zuverlässig arbeitet und deren Wartungsaufwand gegenüber Zündeinrichtungen nach dem Stande der Technik reduziert ist.

Diese Aufgabe wird durch einen Brenner mit den Merkmalen des Patentanspruchs 1, sowie mit einem Verfahren zum Zünden eines Brennstoff-Oxidationsmittelgemisches mit den Merkmalen des Patentanspruchs 8 gelöst. Vorteilhafte Ausgestaltungen der Erfindung sind in den Unteransprüchen beansprucht.

Die Zündeinrichtung eines erfindungsgemäßen Brenners umfasst also wenigstens eine drehbar gelagerte, über eine Welle mit einem Motor verbundene Zündscheibe sowie ein im Bereich einer Reibfläche gegen die Zündscheibe gepresstes Zündelement, wobei Zündscheibe und Zündelement aus jeweils unterschiedlichen Materialien gefertigt sind, von denen eines ein funkenschlagendes und das andere ein funkenlieferndes Material ist und die Zündscheibe an einer im wesentlichen senkrecht zur Brennerachse verlaufenden Achse gelagert ist.

Als "funkenlieferndes" Material soll hier ein Material verstanden werden, aus dem aufgrund der Reibung mit dem funkenschlagenden Material Feststoffpartikel abgelöst werden, die beim Reibvorgang auf eine hohe Temperatur erhitzt worden sind.

Als "funkenschlagendes" Material soll hier ein Material verstanden werden, das geeignet ist, aus dem funkenliefernden Material entsprechende Partikel durch Spanen herauszulösen.

Beispielsweise handelt es sich bei dem funkenliefernden Material um Cereisen und bei dem funkenschlagenden Material um Feuerstein oder gehärteten Stahl. Als funkenschlagendes oder funkenlieferndes Material kann im Übrigen auch das Brennergehäuse oder die Innenwand eines Brennstoff- oder Oxidationsmittelkanals des Brenners zum Einsatz kommen. Beispielsweise besteht die drehbar gelagerte Zündscheibe ganz oder teilweise aus Cereisen und scheuert während des Zündvorgangs direkt an der Innenwand des Brennstoff- oder Oxidationsmittelkanals oder an einer die Innenwand dieses Kanals verstärkenden Platte, die in diesem Fall als funkenschlagendes Material fungiert, wobei sich aufgrund der dabei auftretenden Reibung erhitzte Feststoffpartikel aus dem Cereisen ablösen.

Die Zündung des erfindungsgemäßen Brenners erfolgt also nach dem an sich bekannten Prinzip der Reibzündung: Durch Reibung von Zündscheibe und Zündelement aneinander werden Feststoffpartikel erzeugt, die in Richtung auf das sich vor dem Brennermund im metallurgischen Behandlungsraum bildende Brennstoff-Oxidationsmittelgemisch ausgetragen werden und dort die Zündung des Gemischs bewirken. Dabei ist dafür Sorge zu tragen, dass die Partikel bei ihrer Erzeugung aufgrund der Reibung so stark erhitzt werden, dass ihre Oberflächentemperatur die Zündtemperatur des Brennstoff-Oxidationsmittelgemisches übersteigt und auch während des Transports zur Mischzone von Brennstoff und Oxidationsmittel nicht unter diese Temperatur abkühlen. Daher ist es besonders vorteilhaft, wenn die Zündeinrichtung so gebaut ist, dass die erzeugten Partikel mit einer hohen Anfangsgeschwindigkeit in Richtung Brennermund geschleudert werden. Die Erfindung vermeidet insbesondere wesentliche Nachteile, die mit gängigen Funkenzündern verbunden sind; insbesondere ist weder eine exakte und dauerhaft gleichbleibende Positionierung einer Elektrode erforderlich, noch muss die Zündapparatur selbst zwingend im Bereich vor dem Brennermund angeordnet sein.

Der Betrieb der Zündeinrichtung, also die Drehung der Zündscheibe und die damit verbundene Reibung am Zündelement, ist nur für die Zeit des Zündvorgangs erforderlich; der Verschleiß der Zündeinrichtung ist also gering. Die Dauer des Zündvorgangs hängt insbesondere vom eingesetzten Brennstoff ab. Für die meisten, gut brennbaren Stoffe, wie beispielsweise Erdgas, leichtes Heizöl oder Kohlestaub beträgt sie üblicherweise nicht länger als 1 bis 5 Sekunden, bevorzugt 1 bis 3 Sekunden. Bei schwerer entzündlichen Stoffen kann der Zündvorgang auch länger dauern, für schwere Öle beispielsweise 6 bis 10 Sekunden oder darüber.

In einer bevorzugten Ausgestaltung der Erfindung ist die Zündeinrichtung in einem Brennstoffkanal oder einem Oxidationsmittelkanal des Brenners angeordnet und beispielsweise fest, aber lösbar mit der Wand des entsprechenden Kanals verbunden. Bevorzugt ist sie dabei tief innerhalb des Kanals, mit einem Abstand zwischen 5 cm und 30 cm, besonders bevorzugt zwischen 10 cm und 20 cm, vom Brennermund angeordnet und dadurch gut vor Schlackespritzern aus dem Innern des metallurgischen Behandlungsraums geschützt. Bei dieser Ausgestaltung ist es insbesondere auch möglich, den die Zündeinrichtung aufnehmenden Kanal an seinem dem Brennermund entgegengesetzten Endabschnitt mit einer verschließbaren Wartungsöffnung auszurüsten, durch die die Zündeinrichtung gewartet oder ggf. ausgetauscht werden kann, ohne dass dazu der Brenner als Ganzes aus der Wand des metallurgischen Behandlungsraums ausgebaut werden müsste.

Zweckmäßigerweise ist auch der der mit der Welle verbundene Motor innerhalb eines Brennstoffkanals bzw. eines Oxidationsmittelkanals aufgenommen, bevorzugt in dem Brennstoffkanal bzw. Oxidationsmittelkanal, in dem auch gemäß der vorgenannten Ausführungsform die Zündeinrichtung angeordnet ist. Besonders bevorzugt befindet sich der Motor dabei in einer Kapsel (hier "Motorkapsel" genannt), in der er vor negativen Einwirkungen des umgebenden Brennstoff- bzw. Oxidationsmittelstroms geschützt ist. In dieser Ausgestaltung der Erfindung muss nicht die die Zündscheibe antreibende Welle durch die Wand des Brennergehäuses geführt werden, sondern es genügt, in der Brennerwand und der Wand der Motorkapsel jeweils eine Durchführung für ein elektrisches Kabel zum Betreiben des Motors und eine zweite Durchführung in der Wand der Motokapsel für die die Zündscheibe antreibende Welle vorzusehen.

Erfindungsgemäß ist die Zündscheibe auf einer im wesentlichen senkrecht zur Brennerachse verlaufenden Achse gelagert. Die Reibfläche, also die Fläche, über die das Zündelement während des Einsatzes der Zündeinrichtung gegen die Zündscheibe gepresst wird, befindet sich bei dieser Ausgestaltung auf der Mantelfläche der Zündscheibe oder auf einer Stirnfläche der Zündscheibe, exzentrisch zu deren Achse. Bei der Rotation der Zündscheibe wird die Drehrichtung so gewählt, dass die Bewegungsrichtung der Zündscheibe an der Reibfläche zum Brennermund weist. Bei Betätigung des Motors werden die an der Reibfläche aus der Zündscheibe herausgelösten Partikel unter der Wirkung ihrer Trägheit somit tangential, d. h. in Richtung auf den Brennermund, hinausgeschleudert. Die Anfangsgeschwindigkeit der Partikel kann dabei durch die gewählte Drehzahl des Motors beeinflusst werden. Allgemein gilt: Je höher die Drehzahl gewählt wird, desto höher ist die Anfangsgeschwindigkeit der Partikel. Eine hohe Anfangsgeschwindigkeit ist insbesondere dann von Vorteil, wenn die Zündeinrichtung tief im Brennstoffkanal (oder dem Oxidationsmittelkanal) aufgenommen ist, beispielsweise 10 cm bis 30 cm beabstandet vom Brennermund, da in diesem Fall die Partikel sehr rasch den Brennermund erreichen, ohne wesentlich an Oberflächentemperatur einzubüßen.

Alternativ zu den zuvor genannten Ausgestaltungen, in denen die Zündeinrichtung mit oder ohne den die Zündscheibe antreibenden Motor innerhalb eines Oxidationsmittelkanals oder eines Brennstoffkanals angeordnet ist, ist es erfindungsgemäß auch vorstellbar, die Zündeinrichtung seitlich vom Brennergehäuse innerhalb des metallurgischen Behandlungsraums anzuordnen. Der Abstand zwischen Zündeinrichtung und Brennermund ist dabei so zu wählen, dass die in der Zündeinrichtung erzeugten Feststoffpartikel mit einer zur Zündung des Brennstoff-Oxidationsmittelgemisches hinreichenden Oberflächentemperatur in den Bereich des metallurgischen Behandlungsraums vor dem Brennermund gelangen, in dem sich Brennstoff und Oxidationsmittel vermischen. Beispielsweise wird die Zündeinrichtung 10 cm bis 20 cm seitlich zum Brennermund angeordnet und ist bevorzugt mit einer vor Schlackespritzern schützenden Abschirmung ausgerüstet. Auch in diesem Fall empfiehlt sich eine Zündeinrichtung der vorgenannten Art, bei der die erzeugten Partikel durch die Drehung der Zündscheibe in Richtung der Mischzone von Brennstoff und Sauerstoff geschleudert werden.

In einer besonders vorteilhaften Ausführungsform der Erfindung ist die Welle aus einem elastischen Material gefertigt und derart verspannt in der Zündeinrichtung eingebaut, dass unter der Wirkung der rückstellenden Kraft der Welle die Zündscheibe kontinuierlich gegen das Zündelement gepresst wird. Durch die elastische Verformung der Welle wird also ein Anpressdruck der Zündscheibe auf das Zündelement bewirkt, der auch nach dem Starten der Rotationsbewegung der Zündscheibe beim Zündvorgang aufrecht erhalten wird. Während des Zündvorgangs vergrößert der Anpressdruck die Reibung zwischen Zündscheibe und Zündelement und begünstigt so das Spanen des funkenliefernden Materials. Es sind im Rahmen der Erfindung jedoch auch andere Ausgestaltungen denkbar; so können Zündscheibe und Zündelement auch beispielsweise unter der Wirkung von in geeigneter Weise eingebauten Federelementen gegeneinander gepresst werden.

Beim Brenner handelt es sich um einen außenmischender Brenner, der im Einsatz durch die Wandung eines metallurgischen Behandlungraums hindurchgeführt ist und sich mit seinem Brennermund in den Innenraum des Behandlungsraums hinein öffnet. Grundsätzlich ist die Erfindung sowohl für Brenner geeignet, die mit Luft als Oxidationsmittel arbeiten, wie auch für Brenner, die dazu Sauerstoff oder ein mit Sauerstoff angereichertes Gas einsetzen. Besonders vorteilhaft erweist sich allerdings die Ausführung des erfindungsgemäßen Brenners als Brennstoff-Sauerstoffbrenner, bei dem die Oxidationsmittelzuführung, oder wenigstens eine von mehreren Oxidationsmittelzuführungen, als Zuführung für Sauerstoff ausgebildet und mit einer Quelle für reinen Sauerstoff (mit einem Sauerstoffanteil von >90 Vol.-%) strömungsverbunden ist. Bei derartigen Brennern sind die mit elektrischen Funkenzündern verbundenen Probleme wegen ihrer - gegenüber Brennstoff/Luft-Brennern mit gleicher Leistung - vergleichsweise geringeren Baugröße besonders augenfällig, sodass die Vorteile der Erfindung besonders deutlich zum Tragen kommen.

Als Brennstoffe sind für den erfindungsgemäßen Brenner gasförmige Brennstoffe, wie beispielsweise Erdgas, ebenso geeignet wie flüssige oder zu einem Aerosol zerstäubte flüssige Brennstoffe oder fluidisierte Feststoffpartikel (Stäube).

Die Aufgabe der Erfindung wird auch durch ein Verfahren zum Zünden eines Brennstoff/Oxidationsmittelgemisches am Brennermund eines Brenners mit den Merkmalen des Patentanspruchs 8 gelöst. Dabei werden wenigstens ein Brennstoffstrom und wenigstens ein Oxidationsmittelstrom in getrennten Zuführungen zum Brennermund transportiert, die sich vor dem Brennermund zu einem zündfähigen Brennstoff-Oxidationsmittelgemisch vermischen und anschließend gezündet werden, wobei die Zündung des Brennstoff-Oxidationsmittelgemisches durch Zuführung von auf eine Temperatur oberhalb der Zündtemperatur des Brennstoff-Oxidationsmittelgemisches erhitzten Feststoffpartikeln in das Brennstoff-Oxidationsmittelgemisch erfolgt, die in einer Zündeinrichtung im Wege einer Reibzündung erzeugt werden.

Die Erzeugung der auf eine Temperatur oberhalb der Zündtemperatur des sich vor dem Brennermund bildenden Brennstoff-Oxidationsmittelgemisches erhitzten Feststoffpartikel erfolgt dabei in an sich bekannter Weise durch Reibung eines funkenschlagenden mit einem funkenliefernden Material, also beispielsweise durch Reibung einer rotierenden Zündscheibe aus Cereisen an einem Zündelement aus Feuerstein. Bevorzugt werden die erhitzten Feststoffpartikel dabei im Innern eines Brennstoffkanals oder eines Oxidationsmittelkanals erzeugt und im Strom des jeweiligen Mediums zum Brennermund hinaus in die Zone des metallurgischen Behandlungsraums hinein geschleudert, in der sich das Brennstoff-Oxidationsmittelgemisch bildet, dessen Zündung sie sodann bewirken. Auf diese Weise kann die Feuerung in einem metallurgischen Behandlungsraum zuverlässig Gang gesetzt werden.

Durch eine geeignete Wahl der Materialien sowie des Anpressdrucks und der Rotationsgeschwindigkeit der Zündscheibe gegenüber dem Zündelement kann eine hohe Temperatur bei der Erzeugung der Feststoffpartikel von beispielsweise 600°C bis 800°C erzielt werden. Diese und eine hohe, beispielsweise durch die Drehung der Zündscheibe und/oder den umgebenden Mediumsstrom verursachte Anfangsgeschwindigkeit ermöglichen es, die Partikel über eine größere Distanz von beispielsweise über 10 cm bis 30 cm zu transportieren, ohne dass die Gefahr besteht, dass die Oberflächentemperatur der Partikel unter die Zündtemperatur des Brennstoff-Oxidationsmittelgemisches absinkt. Die Zündeinrichtung kann dadurch tief im Innern des Kanals in einem größeren Abstand vom Brennermund, und damit in einem vor Schlackespritzern weitgehend abgeschirmten Bereich, angeordnet werden.

Anhand der Zeichnungen soll nachfolgend ein Ausführungsbeispiel der Erfindung näher erläutert werden. In schematischen Ansichten zeigen:
- Fig. 1:: Einen erfindungsgemäßen Brenner in einer ersten Ausführungsform im Längsschnitt längs der der Schnittlinie A-A in Fig. 2,
- Fig. 2:: den Brenner aus Fig. 1 im Querschnitt an der Schnittlinie B-B in Fig. 1.

Der in den Zeichnungen gezeigte Brenner 1 umfasst ein Brennergehäuse 2, das in seinem bestimmungsgemäßen Einbauzustand in der Wand eines metallurgischen Behandlungsraums (hier nicht gezeigt) eingebaut ist und an einem Brennermund 3 in den Innenraum des metallurgischen Behandlungsraums hinein ausmündet. Der Brenner 1 weist eine Brennstoffzuführung 4 auf, die in hier nicht gezeigter Weise mit einer Brennstoffquelle, beispielsweise einer Erdgasleitung, strömungsverbunden ist, und die im Bereich des Brennergehäuses 2 als ein längs einer Brennerachse 5 angeordneter zentraler Brennstoffkanal 6 ausgebildet ist. Weiterhin weist der Brenner 1 eine Oxidationsmittelzuführung 8 auf, die in hier gleichfalls nicht gezeigter Weise mit einer Oxidationsmittelquelle, beispielsweise einem Sauerstofftank, strömungsverbunden ist. Innerhalb des Brennergehäuses 2 bildet die Oxidationsmittelzuführung 8 einen koaxial um den zentralen Brennstoffkanal 6 angeordneten Oxidationsmittelkanal 9. Brennstoffkanal 6 und Oxidationsmittelkanal 9 münden gemeinsam am Brennermund 3 in den metallurgischen Behandlungsraum aus. Selbstverständlich können am Brenner 1 noch weitere, hier nicht gezeigte Zuführungen für Brennstoff und/oder Oxidationsmittel vorhanden sein.

Als Brennstoff kommt beispielsweise ein gasförmiger, flüssiger oder staubförmiger Brennstoff in Betracht, beispielsweise Erdgas, Öl oder Kohlestaub. Als Oxidationsmittel kommt beispielsweise reiner Sauerstoff (> 90 Vol.-%) oder mit Sauerstoff angereicherte Luft (mit einem Sauerstoffgehalt >21 Vol.-%) zum Einsatz.

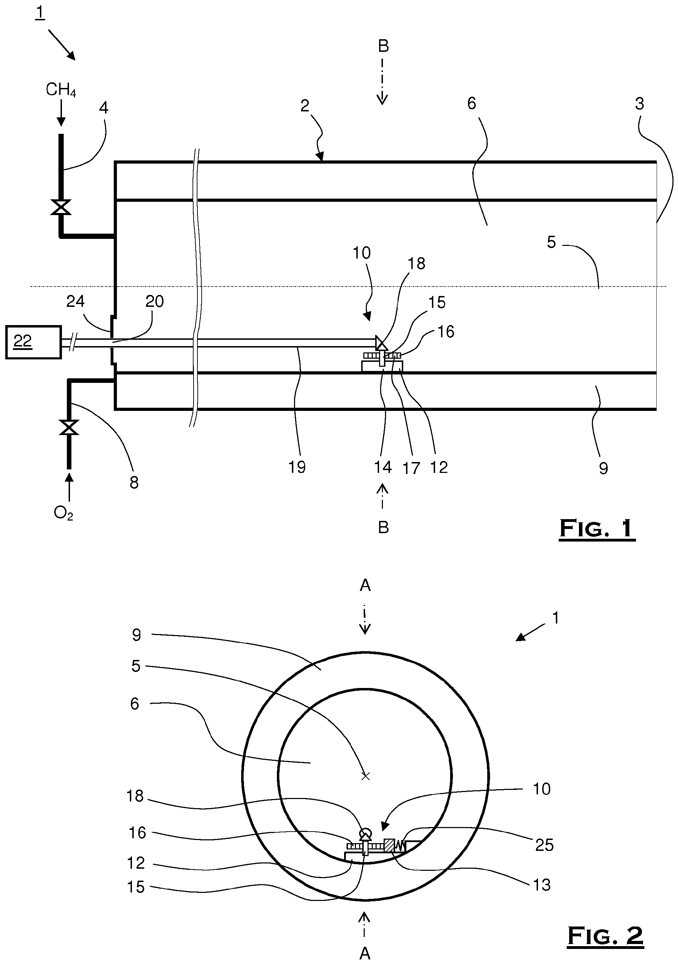

Im Innern des Brennstoffkanals 6 ist, etwa 10 cm bis 20 cm vom Brennermund 3 beabstandet, eine Zündeinrichtung 10 angeordnet. Die Zündeinrichtung 10 umfasst eine auf einer an der Wand des Brennstoffkanals 6 befestigte, beispielsweise verschraubte Halterung 12, auf der ein Zündelement 13 aus einem funkenschlagenden Material, beispielsweise aus Feuerstein oder gehärtetem Stahl montiert ist. Aus Sicht des Betrachters in Fig. 1 gesehen vor dem Zündelement 13 ist auf der Halterung 12 ein Lager 14 angeordnet, in dem eine Welle 15 mit einer senkrecht zur Brennerachse 5 angeordneten Achse drehbar aufgenommen ist. An der Welle 15 ist eine Zündscheibe 16 befestigt, die aus einem pyrophoren, also funkenliefernden Material besteht, das bei einer Reibung mit dem Zündelement 13 zum Ablösen stark erhitzter und beim Kontakt mit Sauerstoff zündender Partikel neigt. Beispielsweise handelt es sich bei dem Material der Zündscheibe 16 um Cereisen. Die Zündscheibe 16 ist bevorzugt auf ihrer Mantelfläche aufgeraut. Das Zündelement 13 und die Zündscheibe 16 sind derart innerhalb des Brennstoffkanals 6 positioniert, dass sich die Mantelfläche der Zündscheibe 16 und das Zündelement 13 an einer parallel zur Brennerachse 5 orientierten Reibfläche 17 berühren.

Im Übrigen kann im Rahmen der Erfindung auch die Zündscheibe 16 aus einem funkenschlagenden und das Zündelement 13 aus einem funkenliefernden Material bestehen; wesentlich ist, dass durch eine reibende Drehung der Zündscheibe 16 gegen das Zündelement 13 erhitzte Partikel erzeugt und nachfolgend zum Brennermund 3 hinausgetragen werden. Weiterhin ist es nicht erforderlich, dass die gesamte Zündscheibe 16 aus einem funkenschlagenden bzw. funkenliefernden Material besteht, es genügt vielmehr, dass der Teil der Zündscheibe 16, der im Bereich der Reibfläche 17 in Kontakt mit dem Zündelement 13 kommt, aus einem solchen Material besteht; im Ausführungsbeispiel ist dies die Mantelfläche der Zündscheibe 16 oder ein Teil der Mantelfläche.

Die Welle 15 ist über eine Kupplung 18, die eine Umlenkung der Drehbewegung um 90° erlaubt, mit einer Welle 19 wirkverbunden, die sich durch das Innere des Brennstoffkanals 6 parallel zur Brennerachse 5 erstreckt. Die Welle 19 ist an einer Durchführung 20 durch die dem Brennermund 3 gegenüberliegende Hinterwand 22 des Brenners 1 hindurchgeführt und mit einem Motor 21 verbunden. Beim Motor 21 handelt es sich um eine beispielsweise elektrisch angetriebene Motoreinheit, die die Welle 19, und über die Kupplung 18 auch die Welle 15, in eine rasche Drehbewegung versetzen kann. Die Durchführung 20 ist innerhalb einer an der Hinterwand 22 angeordneten Klappe 24 angeordnet, die eine Wartungsöffnung verschließt. Durch Öffnen der Klappe 24 kann bei Bedarf die Zündeinrichtung 10 aus dem Brenner 1 entnommen und ggf. ausgetauscht werden, ohne dass dazu der komplette Brenner 1 aus dem Behandlungsraum entfernt werden müsste. Ebenfalls möglich wäre im Übrigen eine Anordnung des Motors 21 in einer Einhausung (Motorkapsel) innerhalb des Brennstoffkanals 6, wobei im Bereich der Klappe 24 geeignete Kabeldurchführungen für zum Betreiben des Motors 21 erforderliche Stromkabel vorzusehen wären.

Um die Reibung zwischen Zündscheibe 16 und Zündelement 13 zu erhöhen, können Federelemente 25 vorgesehen sein, die das Zündelement 13 im Bereich der Reibfläche 17 gegen die Mantelfläche der Zündscheibe 16 pressen, wobei das Zündelement diesem Falle begrenzt in Richtung auf die Zündscheibe 16 bewegbar angeordnet ist. Alternativ oder ergänzend dazu ist es im Rahmen der Erfindung auch vorstellbar, die Welle 15 samt Zündscheibe 16 seitlich (von der Brennerachse aus gesehen) verschwenkbar in der Halterung 12 aufzunehmen und die Welle 19 aus einem flexiblen Material zu fertigen und derart in den Brenner 1 einzuspannen, dass sie beim Zünden auf die Welle 15 (und damit auf die Zündscheibe 16) eine seitliche, in Richtung des Zündelements 13 weisende Kraftwirkung entfaltet, wodurch die Mantelfläche der Zündscheibe 16 gegen das Zündelement 13 gepresst wird.

Im Betrieb des Brenners 1 wird Brennstoff durch die Brennstoffzuführung 4 und Oxidationsmittel durch die Oxidationsmittelzuführung 8 geleitet. Der Motor 21 steht zunächst noch still. Der Brennstoffstrom durchläuft den Brennstoffkanal 6 und strömt am Brennermund 3 in den metallurgischen Behandlungsraum ein, wo er sich mit dem durch den Oxidationsmittelkanal 9 geführten Oxidationsmittelstrom zu einem zündfähigen Gemisch vermischt.

Zur Zündung dieses Brennstoff/Oxidationsmittelgemisches wird der Motor 21 für eine kurze Zeitdauer von beispielsweise 1s bis 5s, bevorzugt 1s bis 3s, betätigt, woraufhin die Welle 19 und, vermittels der Kupplung 18, auch die Welle 15 und die Zündscheibe 16 in eine rasche Drehbewegung versetzt wird. Dabei reibt die Zündscheibe 16 am Zündelement 13 im Bereich der Reibfläche 17. Durch die Reibung werden aus dem funkenliefernden Material aus der Zündscheibe 16 durch Spanen Partikel herausgelöst, die durch die Reibungshitze stark erhitzt sind. Die Richtung der Rotation der Zündscheibe 16 wird so gewählt, dass sich ihre Mantelfläche auf ihrer dem Zündelement 13 zugewandten Seite zum Brennermund 3 hin bewegt, wodurch die bei der Reibung abgelösten Partikel in Richtung zum Brennermund 3 hin geschleudert werden. Dadurch, und durch den zusätzlichen Druck des Brennstoffstroms, werden die Partikel in kurzer Zeit sehr weit befördert, ohne dass ihre Oberflächentemperatur die Zündtemperatur des sich vor dem Brennermund 3 entstehenden Brennstoff-Sauerstoff-Gemisches unterschreitet.

Die erhitzten Partikel werden zum Brennermund 3 hinausgetragen und gelangen in die Zone des metallurgischen Behandlungsraums, in der das zündfähige Brennstoff-Oxidationsmittelgemisch gebildet wird. Die Temperatur auf der Oberfläche der Partikel ist beim Austritt aus dem Brennermund 3 noch so hoch, dass die Zündtemperatur des Brennstoff-Oxidationsmittelgemisches überschritten wird, und es erfolgt eine Zündung des Gemisches, das im Anschluss selbsttätig weiterbrennt. Nach dem Zündvorgang wird der Motor 21 gestoppt und die Drehbewegung der Zündscheibe 16 kommt zum Erliegen.

Im Rahmen der Erfindung ist es im Übrigen auch möglich, die Zündeinrichtung 10 nicht im Brennstoffkanal 6, sondern im Oxidationsmittelkanal 9 oder in einer einen Teilstrom des Brennstoffs und/oder des Oxidationsmittels führenden, gleichfalls zum Brennermund führenden Seitenkanal anzuordnen. Beim Einbau der Zündeinrichtung 10 im Oxidationsmittelkanal 9 oder in einen Oxidationsmittel führenden Seitenkanal erfolgt bereits innerhalb des Kanals die Entstehung glühender Funken, deren Oberflächentemperatur sich bis zum Erreichen des Brennermundes kaum reduziert oder aufgrund der Reaktion mit dem Sauerstoff des Oxidationsmittelstroms sogar ansteigt.

Ebenso ist es im Rahmen der Erfindung möglich, eine Zündeinrichtung seitlich vom Brennergehäuse 2 anzuordnen, wobei in diesem Fall darauf zu achten ist, dass in der Zündeinrichtung erzeugte erhitzte Partikel in Richtung eines vor dem Brennermund 3 gelegenen Bereiches des metallurgischen Behandlungsraums geschleudert werden, in dem sich Brennstoff und Oxidationsmittel zu einem zündfähigen Gemisch vermischen. In diesem Fall sollte die Zündeinrichtung mit einer Schutzeinrichtung ausgerüstet sein, die sie vor Schlackespritzern o. ä. abschirmt.

### Bezuaszeichenliste:

- 1.: Brenner
- 2.: Brennergehäuse
- 3.: Brennermund
- 4.: Brennstoffzuführung
- 5.: Brennerachse
- 6.: Brennstoffkanal
- 7.: -
- 8.: Oxidationsmittelzuführung
- 9.: Oxidationsmittelkanal
- 10.: Zündeinrichtung
- 11.: -
- 12.: Halterung
- 13.: Zündelement
- 14.: Lager
- 15.: Welle
- 16.: Zündscheibe
- 17.: Reibfläche
- 18.: Kupplung
- 19.: Welle
- 20.: Durchführung
- 21.: Motor
- 22.: Hinterwand
- 23.: -
- 24.: Klappe
- 25.: Federelemente

## Patentansprüche

1. Brenner, der mit wenigstens einem Brennstoffkanal (6) und wenigstens einem Oxidationsmittelkanal (9), die einem zum Einbau in der Wand eines metallurgischen Behandlungsraums bestimmten Brennergehäuse (2) zugeordnet sind und an einem gemeinsamen Brennermund (3) ausmünden, sowie mit einer Zündeinrichtung (10) zum Zünden eines sich vor dem Brennermund (3) im Behandlungsraum bildenden Brennstoff/ Oxidationsmittelgemisches ausgerüstet ist, wobei die Zündeinrichtung (10) wenigstens eine drehbar gelagerte, über eine Welle (19) verbundene Zündscheibe (16) sowie ein entlang einer Reibfläche (17) gegen die Zündscheibe (16) gepresstes Zündelement (13) aufweist, wobei Zündscheibe (16) und Zündelement (16) aus jeweils unterschiedlichen Materialien gefertigt sind, von denen eines ein funkenschlagendes und das andere ein funkenlieferndes Material ist, **dadurch gekennzeichnet, dass** der Brenner einen Motor (21) aufweist, mit dem die Zündscheibe (16) über die Welle (19) verbunden ist, und dass die Zündscheibe (16) an einer im wesentlichen senkrecht zur Brennerachse (5) verlaufenden Achse gelagert ist.

2. Brenner nach Anspruch 1, **dadurch gekennzeichnet, dass** die Zündeinrichtung (10, 26) innerhalb eines Brennstoffkanals (6) oder eines Oxidationsmittelkanals (9) angeordnet ist.

3. Brenner nach Anspruch 2, **dadurch gekennzeichnet, dass** die Zündeinrichtung (10) innerhalb des Brennstoffkanals (6) oder des Oxidationsmittelkanals (9), zwischen 10cm und 20cm beabstandet vom Brennermund (3) angeordnet ist.

4. Brenner nach einem der vorhergehenden Ansprüche, **dadurch gekennzeichnet, dass** der mit der Welle (19) verbundene Motor innerhalb eines Brennstoffkanals (6) oder eines Oxidationsmittelkanals (9) aufgenommen ist.

5. Brenner nach Anspruch 1, **dadurch gekennzeichnet, dass** die Zündeinrichtung (10, 26) seitlich beabstandet vom Brennergehäuse (2) angeordnet ist.

6. Brenner nach einem der vorhergehenden Ansprüche, **dadurch gekennzeichnet, dass** die Welle (19) aus einem elastischen Material gefertigt ist und derart verspannt in der Zündeinrichtung (10) eingebaut ist, dass unter der Wirkung der rückstellenden Kraft der Welle (19) die Zündscheibe (16) gegen das Zündelement (13) gepresst wird.

7. Brenner nach einem der vorhergehenden Ansprüche, **gekennzeichnet durch** die Ausführung als Brennstoff-Sauerstoff-Brenner.

8. Verfahren zum Zünden eines Brennstoff/Oxidationsmittelgemisches vor dem Brennermund (3) eines Brenners (1), bei dem wenigstens ein Brennstoffstrom und wenigstens ein Oxidationsmittelstrom in getrennten Zuführungen (4, 8) zum Brennermund (3) transportiert werden, sich vor dem Brennermund (3) zu einem zündfähigen Brennstoff-Oxidationsmittelgemisch vermischen und anschließend gezündet werden,
und die Zündung des Brennstoff-Oxidationsmittelgemisches durch Zuführung von auf eine Temperatur oberhalb der Zündtemperatur des Brennstoff-Oxidationsmittelgemisches erhitzten Feststoffpartikel erfolgt, die in einer Zündeinrichtung (10) durch Reibzündung erzeugt werden, wobei die Zündeinrichtung (10) wenigstens eine drehbar gelagerte, über eine Welle (19) mit einem Motor (21) verbundene Zündscheibe (16) sowie ein entlang einer Reibfläche (17) gegen die Zündscheibe (16) gepresstes Zündelement (13) aufweist, wobei Zündscheibe (16) und Zündelement (16) aus jeweils unterschiedlichen Materialien gefertigt sind, von denen eines ein funkenschlagendes und das andere ein funkenlieferndes Material ist und die Zündscheibe (16) an einer im Wesentlichen senkrecht zur Brennerachse (5) verlaufenden Achse gelagert ist und die erhitzten Feststoffpartikel bei der Betätigung der Zündeinrichtung (10) in Richtung des Brennermunds (3) geschleudert werden.

## Claims

1. Burner which is equipped with at least one fuel channel (6) and at least one oxidant channel (9), which are assigned to a burner housing (2) intended for installation in the wall of a metallurgical treatment chamber and which open out at a common burner mouth (3), and with an ignition device (10) for igniting a fuel/oxidant mixture that forms upstream of the burner mouth (3) in the treatment chamber, wherein the ignition device (10) has at least one rotatably mounted ignition disc (16), which is connected via a shaft (19), and an ignition element (13), which is pressed along a friction surface (17) against the ignition disc (16), wherein ignition disc (16) and ignition element (16) are manufactured from in each case different materials, one of which is a spark-striking material and the other of which is a spark-supplying material, **characterized in that** the burner has a motor (21) to which the ignition disc (16) is connected via the shaft (19), and **in that** the ignition disc (16) is mounted on an axle running substantially perpendicular to the burner axis (5).

2. Burner according to Claim 1, **characterized in that** the ignition device (10, 26) is arranged within a fuel channel (6) or an oxidant channel (9).

3. Burner according to Claim 2, **characterized in that** the ignition device (10) is arranged within the fuel channel (6) or the oxidant channel (9), at a spacing of between 10 cm and 20 cm from the burner mouth (3) .

4. Burner according to any of the preceding claims, **characterized in that** the motor connected to the shaft (19) is accommodated within a fuel channel (6) or an oxidant channel (9).

5. Burner according to Claim 1, **characterized in that** the ignition device (10, 26) is arranged laterally spaced apart from the burner housing (2).

6. Burner according to any of the preceding claims, **characterized in that** the shaft (19) is manufactured from an elastic material and is installed in braced fashion in the ignition device (10) such that the ignition disc (16) is pressed against the ignition element (13) under the action of the restoring force of the shaft (19).

7. Burner according to any of the preceding claims, **characterized by** the embodiment as a fuel-oxygen burner.

8. Method for igniting a fuel/oxidant mixture upstream of the burner mouth (3) of a burner (1), in which method at least one fuel stream and at least one oxidant stream are transported in separate feed lines (4, 8) to the burner mouth (3), mix upstream of the burner mouth (3) to form an ignitable fuel-oxidant mixture, and are subsequently ignited,
and the ignition of the fuel-oxidant mixture is performed by means of a feed of solids particles heated to a temperature above the ignition temperature of the fuel-oxidant mixture, which solids particles are generated by friction ignition in an ignition device (10), wherein the ignition device (10) has at least one rotatably mounted ignition disc (16), which is connected via a shaft (19) to a motor (21), and an ignition element (13), which is pressed along a friction surface (17) against the ignition disc (16), wherein ignition disc (16) and ignition element (16) are manufactured from in each case different materials, one of which is a spark-striking material and the other of which is a spark-supplying material, and the ignition disc (16) is mounted on an axle running substantially perpendicular to the burner axis (5), and the heated solids particles are, upon the actuation of the ignition device (10), centrifuged in the direction of the burner mouth (3).

## Revendications

1. Brûleur, qui est équipé d'au moins un canal de combustible (6) et d'au moins un canal d'oxydant (9), qui sont associés à un boîtier de brûleur (2) destiné à être installé dans la paroi d'une chambre de traitement métallurgique et débouchent au niveau d'une embouchure de brûleur commune (3), ainsi que d'un appareil d'allumage (10) pour l'allumage d'un mélange combustible/oxydant se formant devant l'embouchure de brûleur (3) dans la chambre de traitement,
dans lequel
l'appareil d'allumage (10) comprend au moins un disque d'allumage (16) monté rotatif, relié par l'intermédiaire d'un arbre (19), ainsi qu'un élément d'allumage (13) pressé contre le disque d'allumage (16) le long d'une surface de frottement (17), le disque d'allumage (16) et l'élément d'allumage (16) étant fabriqués à partir de matériaux respectivement différents, parmi lesquels un est un matériau déchargeant des étincelles et l'autre est un matériau fournissant des étincelles, **caractérisé en ce que** le brûleur comprend un moteur (21), avec lequel le disque d'allumage (16) est relié par l'intermédiaire de l'arbre (19), et **en ce que** le disque d'allumage (16) est monté sur un axe essentiellement perpendiculaire à l'axe de brûleur (5).

2. Brûleur selon la revendication 1, **caractérisé en ce que** l'appareil d'allumage (10, 26) est agencé à l'intérieur d'un canal de combustible (6) ou d'un canal d'oxydant (9).

3. Brûleur selon la revendication 2, **caractérisé en ce que** l'appareil d'allumage (10) est agencé à l'intérieur du canal de combustible (6) ou du canal d'oxydant (9), à un écartement compris entre 10 cm et 20 cm de l'embouchure de brûleur (3).

4. Brûleur selon l'une quelconque des revendications précédentes, **caractérisé en ce que** le moteur relié avec l'arbre (19) est reçu à l'intérieur d'un canal de combustible (6) ou d'un canal d'oxydant (9).

5. Brûleur selon la revendication 1, **caractérisé en ce que** l'appareil d'allumage (10, 26) est agencé à un écartement latéral du boîtier de brûleur (2).

6. Brûleur selon l'une quelconque des revendications précédentes, **caractérisé en ce que** l'arbre (19) est fabriqué en un matériau élastique et est installé sous forme tendue dans l'appareil d'allumage de telle sorte que, sous l'effet de la force de rappel de l'arbre (19), le disque d'allumage (16) soit pressé contre l'élément d'allumage (13).

7. Brûleur selon l'une quelconque des revendications précédentes, **caractérisé par** la réalisation sous la forme d'un brûleur combustible-oxygène.

8. Procédé d'allumage d'un mélange combustible/oxydant devant l'embouchure de brûleur (3) d'un brûleur (1), selon lequel au moins un courant de combustible et au moins un courant d'oxydant sont transportés dans des conduites d'apport séparées (4, 8) jusqu'à l'embouchure de brûleur (3), se mélangent devant l'embouchure de brûleur (3) en un mélange combustible-oxydant allumable, puis sont allumés,
et l'allumage du mélange combustible-oxydant a lieu par apport de particules solides portées à une température supérieure à la température d'allumage du mélange combustible-oxydant, qui sont générées dans un appareil d'allumage (10) par allumage par frottement,
dans lequel
l'appareil d'allumage (10) comprend au moins un disque d'allumage (16) monté rotatif, relié par l'intermédiaire d'un arbre (19) avec un moteur (21), ainsi qu'un élément d'allumage (13) pressé contre le disque d'allumage (16) le long d'une surface de frottement (17), le disque d'allumage (16) et l'élément d'allumage (16) étant fabriqués à partir de matériaux respectivement différents, parmi lesquels un est un matériau déchargeant des étincelles et l'autre est un matériau fournissant des étincelles, et le disque d'allumage (16) est monté sur un axe essentiellement perpendiculaire à l'axe de brûleur (5), et les particules solides chauffées sont centrifugées lors de l'actionnement de l'appareil d'allumage (10) dans la direction de l'embouchure de brûleur (3).
